# EUROPEAN PATENT APPLICATION

(11) **EP 1 967 898 A1**
(43) Date of publication of application: **10.09.2008**
(21) Application number: 06834406.8
(22) Date of filing: 11.12.2006
(51) Int. Cl.: G02F 1/1343, H01B 5/14

(54) **TRANSPARENT ELECTRODE FILM AND ELECTRONIC DEVICE**

(30) Priority: 26.12.2005 JP 2005372254
(71) Applicant: IDEMITSU KOSAN CO., LTD., Tokyo 100-8321 (JP)
(72) Inventor: UMENO, Satoshi, Sodegaura-shi, Chiba 299-0293 (JP); INOUE, Kazuyoshi, Sodegaura-shi, Chiba 299-0293 (JP); YANO, Koki, Sodegaura-shi, Chiba 299-0293 (JP); HONDA, Katsunori, Sodegaura-shi, Chiba 299-0293 (JP); MATSUBARA, Masato, Sodegaura-shi, Chiba 299-0293 (JP)
(74) Representative: Gille Hrabal Struck Neidlein Prop Roos
(86) International application number: PCT/JP2006/324651
(87) International publication number: WO 2007/074628

(57) **Abstract**

A transparent electrode film including an oxide containing indium, zinc and tin and having a thickness of 25 nm or less. A transparent electrode film including an oxide containing indium and zinc and having a thickness of 30 nm or less.

## Description

### TECHNICAL FIELD

The invention relates to a transparent electrode film and an electronic device such as a liquid crystal display obtained by using the same.

### BACKGROUND

Indium tin oxide (ITO) films are widely known as transparent conductive films used in an electrode circuit, a pixel electrode or the like of a liquid crystal display. In a liquid crystal display, high-speed response of liquid crystal molecules is required to enable moving images to be displayed. For that purpose, the dielectric constant of a transparent electrode film is required to be increased. Furthermore, in order to obtain a clear and bright image, effective use of backlight emission is necessary. In order to attain effective use of backlight emission, transmittance of a transparent electrode film is required to be enhanced. However, none of the conventional transparent electrode films have both a high dielectric constant and a high transmittance.

Conventional transparent electrode films represented by ITO have a low refractive index. Since dielectric constant is in proportion to the square of refractive index, conventional transparent electrode films cannot have a sufficiently high dielectric constant, and hence liquid crystal molecules cannot have an enhanced driving rate.

As the transparent conductive film replacing an indium tin oxide film, an indium zinc oxide (IZO) film, and an indium tin zinc oxide (ITZO) film are known (Patent Document 1, for example).
Patent Document 1: JP-A-07-235219

An object of the invention is to provide a transparent electrode film having a high dielectric constant and a high transmittance, as well as an electronic device obtained by using the same.

### SUMMARY OF THE INVENTION

As a result of extensive studies, the inventors have found that refractive index can be surprisingly increased by allowing an indium tin zinc oxide film or an indium zinc oxide film to have an extremely reduced thickness. The invention has been made based on this finding.
The invention provides the following transparent electrode film or the like.
1. A transparent electrode film comprising an oxide containing indium, zinc and tin and having a thickness of 25 nm or less.
2. A transparent electrode film comprising an oxide containing indium and zinc and having a thickness of 30 nm or less.
3. The transparent electrode film according to 1 which has an atomic ratio In/(In+Zn+Sn) of 0.4 to 0.95, an atomic ratio Zn/(In+Zn+Sn) of 0.01 to 0.59, and an atomic ratio Sn/(In+Zn+Sn) of 0.01 to 0.59.
4. The transparent electrode film according to 2 which has an atomic ratio In/(In+Zn) of 0.5 to 0.95 and an atomic ratio Zn/(In+Zn) of 0.05 to 0.5.
5. The transparent electrode film according to any one of 1 to 4 wherein the oxide is amorphous.
6. The transparent electrode film according to any one of 1 to 5 which has a refractive index of 1.9 or more at a wavelength ranging from 300 to 800 nm.
7. An electronic device which is provided with the transparent electrode film according to any one of 1 to 6 as at least part of an electric circuit.
8. The electronic device according to 7 which is a liquid crystal display.

The invention can provide a transparent electrode film having a high dielectric constant and a high transmittance, and an electronic device obtained by using the same.

Since the transparent electrode film of the invention has a high refractive index, the dielectric constant thereof can be increased, as dielectric constant is in proportion to the square of refractive index. As a result, response of liquid crystal molecules can be enhanced, and a liquid display having a high degree of response enabling moving image display can be provided.

Due to a reduced thickness, the transparent electrode film of the invention has a high transmittance. As a result, a liquid crystal display capable of displaying a bright and clear image can be provided.

### BRIEF DESCRIPTION OF DRAWINGS

FIG. 1 is a graph showing relationship between the wavelength and the refractive index of an ITZO film and ITO film;
FIG. 2 is a graph showing relationship between the wavelength and the transmittance of the ITZO film and the ITO film;
FIG. 3 is a graph showing relationship between the thickness and the resistivity of the ITZO film;
FIG. 4 is a graph showing relationship between the wavelength and the refractive index of the IZO film; and
FIG. 5 is a graph showing relationship between the wavelength and the transmittance of the IZO film.

### BEST MODE FOR CARRING OUT THE INVENTION

The transparent electrode film of the invention comprises an oxide containing indium, zinc and tin, or an oxide containing indium and zinc. The oxide is preferably amorphous. If the oxide is not amorphous, the thin film may not be uniform.

If the transparent electrode film comprises an amorphous oxide containing indium, zinc and tin, the atomic ratio of these atoms are preferably as follow: In/(In+Zn+Sn) is 0.4 to 0.95, Zn/(In+Zn+Sn) is 0.01 to 0.59, and Sn/(In+Zn+Sn) is 0.01 to 0.59. More preferably, In/(In+Zn+Sn) is 0.42 to 0.9, Zn/(In+Zn+Sn) is 0.03 to 0.45, and Sn/(In+Zn+Sn) is 0.03 to 0.45.

When the atomic ratio of indium is too high, etching rate may be slow or etching residues may remain after etching when etching is performed with a nitric acid-based etchant, adjustment of the taper angle may be difficult, adhesion to a metal or an alloy may be lowered, or the ratio (B/A) of etching rate B to etching rate A, in which etching rate A is the rate of etching using a phosphoric acid-containing etchant and etching rate B is the rate of etching using an oxalic acid-containing etchant, may be lowered. If the atomic ratio of indium is too low, resistivity may be increased or durability of a TCP (Tape Carrier Package) connection part may be lowered when used as an electrode.
If the atomic ratio of zinc is too high, resistivity may be increased significantly if the film is heat-treated in the presence of oxygen or durability of a TCP connection part may be lowered. If the atomic ratio of zinc is too low, etching rate may be slow or etching residues may remain after etching, or adhesion to a metal or an alloy may be lowered.
If the atomic ratio of tin is too high, etching rate may be slow or etching residues may remain after etching, or adhesion to a metal or an alloy may be lowered. If the atomic ratio of tin is too low, etching rate may be too fast to be controlled, resistivity may be increased significantly if the film is heat-treated in the presence of oxygen or durability of a TCP connection part may be lowered.

If the transparent electrode film comprises an amorphous oxide containing indium and zinc, the atomic ratio of these atoms are preferably as follow: In/(In+Zn) is 0.5 to 0.95 and Zn/(In+Zn) is 0.05 to 0.5. More preferably, In/(In+Zn) is 0.6 to 0.95 and Zn/(In+Zn) is 0.05 to 0.4.

When the atomic ratio of indium is too high, etching rate may be slow or etching residues may remain after etching when etching is performed with a nitric acid-based etchant, adjustment of the taper angle may be difficult, adhesion to a metal or an alloy may be lowered, or the ratio (B/A) of etching rate B to etching rate A, in which etching rate A is the rate of etching using a phosphoric acid-containing etchant and etching rate B is the rate of etching using an oxalic acid-containing etchant, may be lowered. If the atomic ratio of indium is too low, resistivity may be increased or durability of a TCP (Tape Carrier Package) connection part may be lowered when used as an electrode.
When the atomic ratio of the zinc is too high, resistivity may be increased significantly if the film is heat-treated in the presence of oxygen or the durability of a TCP connection part may be lowered. If the atomic ratio of zinc is too low, etching rate may be slow or etching residues may remain after etching, or adhesion to a metal or an alloy may be lowered.

Insofar as the advantageous effects of the invention are not impaired, the transparent electrode film of the invention may contain a heavy metal such as Ga and lanthanoid or other elements in an amount of approximately several atomic percents.

If the transparent electrode film of the invention comprises an oxide containing indium, zinc and tin, the thickness thereof is 25 nm or less, preferably 5 to 25 nm, more preferably 10 to 20 nm. If the transparent electrode film of the invention comprises an oxide containing indium and zinc, the thickness thereof is 30 nm or less, preferably 5 to 30 nm, and more preferably 10 to 25 nm. If the thickness is too large, refractive index may be increased. If the thickness is too small, resistivity may be too large or durability of a TCP connection part may be lowered.

The refractive index of the transparent electrode film of the invention is preferably 1.9 or more, more preferably 2.0 or more within a wavelength range of 300 to 800 nm. If the refractive index is less than 1.9, the dielectric constant may not be increased sufficiently.
The method for measuring the refractive index is described in Examples.

The transparent electrode film of the invention can be used as at least part of an electric circuit of a liquid crystal display, an organic or inorganic EL display, a plasma display panel (PDP) and a surface conduction electron emitter display (SED) and the like. Since it has a high dielectric constant and a high transmittance, the transparent electrode film of the invention can be used particularly preferably in liquid crystal displays.

The transparent electrode film of the invention may be provided not only on an inorganic product such as glass and an inorganic insulating film, but also on an organic substrate or an organic film. Unlike a crystalline film such as a polycrystalline ITO film, the transparent electrode film of the invention hardly suffers from crystalline unevenness on an organic substrate or an organic film, and therefore, is preferable as a transparent electrode film used on an organic substrate or an organic film.

The transparent electrode film of the invention can be formed on a substrate by sputtering using a target containing a required oxide selected from an indium oxide, a tin oxide and a zinc oxide, by applying slurry obtained by suspending the oxide in water or an organic solvent, by applying a solution of a precursor of the oxide, or by other methods. Preferably, the transparent electrode film is formed by sputtering.

### EXAMPLES

### Examples 1 and 2 and Comparative Examples 1 and 2

### [Transparent electrode film comprising an amorphous oxide containing indium, zinc and tin (ITZO)]

### (1) Preparation of a transparent conductive film

Using an oxide target having a composition of In:Sn:Zn of 54:16:30 (atomic percent), an In₂O₃-SnO₂-ZnO film (ITZO film) was formed by sputtering on a glass substrate at 180°C and an oxygen partial pressure of 3 × 10⁻³ Pa (5 × 10⁻⁵ Torr). The thicknesses of the ITZO films were 10 nm (Example 1), 20 nm (Example 2), 30 nm (Comparative Example 1) and 80 nm (Comparative Example 2). An elemental analysis by ICP (inductively coupled plasma) spectrometry of the resulting ITZO films revealed that the films had almost the same composition as that of the target used for the film formation.
X-ray diffraction patterns of these ITZO films confirmed that the ITZO films were an amorphous film showing a broad curve when film formation was conducted at 180°C.

### (2) Evaluation of a transparent electrode film

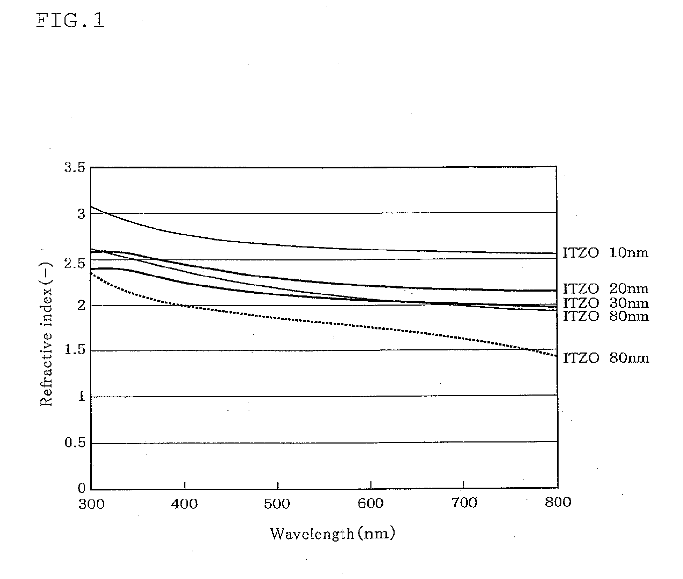

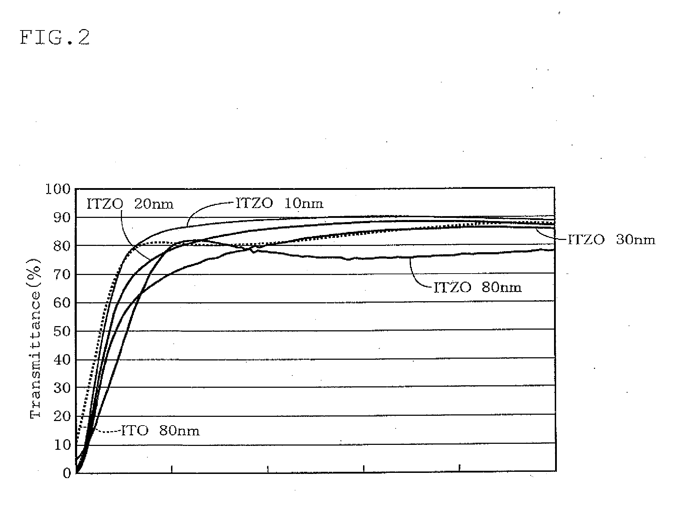

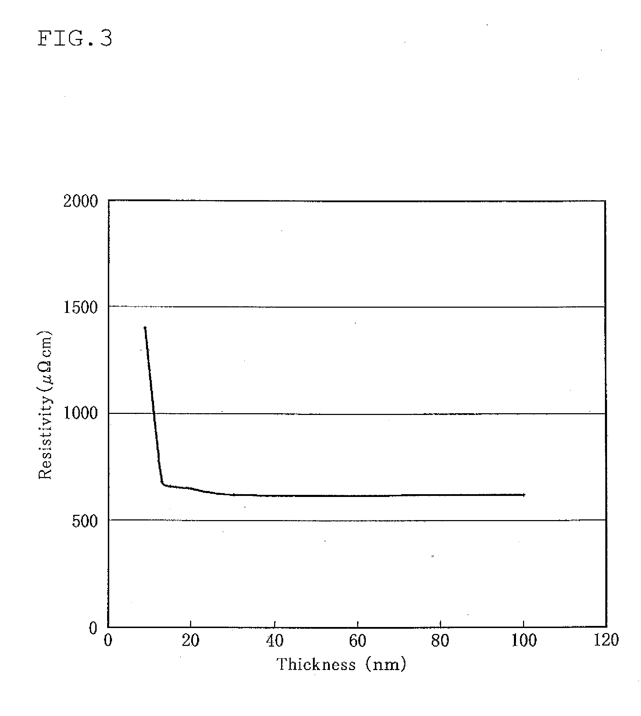

For the resulting ITZO films, refractive index and transmittance were measured by the following method. For each film thickness, relationship between wavelength and refractive index at each thickness is shown in FIG. 1 and relationship between wavelength and transmittance at each thickness is shown in FIG. 2. Relationship between thickness and resistivity is shown in FIG. 3.

### (i) Refractive index

Measurement was conducted by means of an optical thin film measurement system (Film Tek 4000, supplied by SCI Corporation).

### (ii) Transmittance

Measurement was conducted by means of an optical thin film measurement system (Film Tek 4000, supplied by SCI Corporation)

### (iii) Thickness

Measurement was conducted by means of an optical thin film measurement system (Film Tek 4000, supplied by SCI Corporation and a thickness meter (Dektak8, supplied by ULVAC, Inc.).

### (iv) Resistivity

For an as-deposited ITZO film, measurement was conducted at room temperature in air by means of a resistance meter (Loresta EP, supplied by DIAINSTRUMENTS, Inc.).

### Examples 3 to 5 and Comparative Example 3

### [Transparent electrode film comprising an amorphous oxide containing indium and zinc]

### (1) Preparation of a transparent electrode film

Using an oxide target having a composition of In: Zn of 84:16 (atomic percent), an In₂O₃-ZnO film (IZO film) was formed by sputtering on a glass substrate at 180°C and an oxygen partial pressure of 3 × 10⁻³ Pa (5 × 10⁻⁵ Torr) . The thicknesses of the IZO films were 10 nm (Example 3), 20 nm (Example 4), 30 nm (Example 5) and 100 nm (Comparative Example 3). An elemental analysis by ICP (inductively coupled plasma) spectrometry of the IZO films revealed that the films had almost the same composition as that of the target used for the film formation.
X-ray diffraction patterns of these IZO films confirmed that the IZO films were an amorphous film showing a broad curve when film formation was conducted at 180°C.

### (2) Evaluation of physical properties of a transparent electrode film

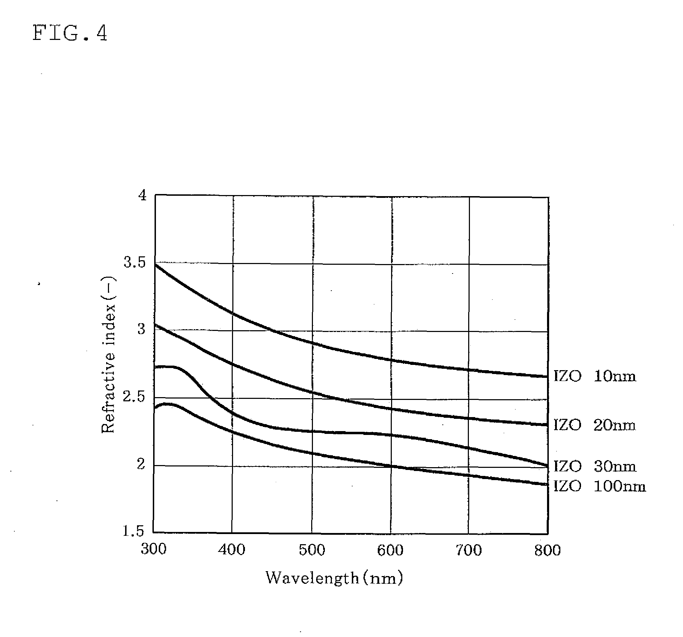

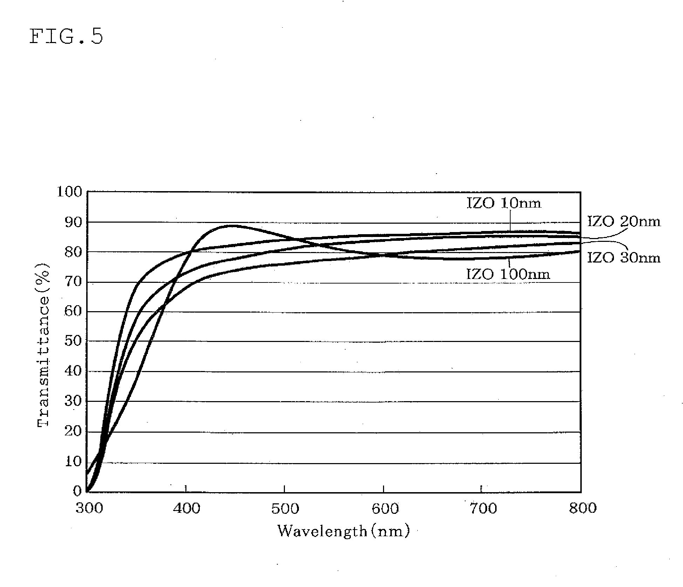

The physical properties of the resulting IZO film were evaluated in the same manner as in Example 1. Relationship between wavelength and refractive index is shown in FIG. 4 and relationship between wavelength and transmittance is shown in FIG. 5.

### Comparative Example 4

### [Transparent electrode film comprising an amorphous oxide containing indium and tin (ITO)]

### (1) Preparation of a transparent electrode film

Using an oxide target having a composition of In: Sn of 91:9 (atomic percent), an 80 nm-thick In₂O₃-SnO₂ film (ITO film) was formed by sputtering on a glass substrate at 180°C and an oxygen partial pressure of 3 × 10⁻³ Pa (5 × 10⁻⁵ Torr). An elemental analysis by ICP (inductively coupled plasma) spectrometry of the ITO film revealed that the film had almost the same composition as that of the target used for the film formation.

### (2) Evaluation of physical properties of a transparent electrode film

The physical properties of the resulting ITO film were evaluated in the same manner as in Example 1. Relationship between wavelength and refractive index is shown in FIG. 1 and relationship between wavelength and transmittance is shown in FIG. 2. In FIGS. 1 and 2, the data of the ITO film was indicated by a dotted line.

### INDUSTRIAL APPLICABILITY

The transparent electrode film of the invention is suitable for use as a transparent electrode used in electronic devices such as liquid crystal displays, organic or inorganic EL displays, PDPs and SEDs.

## Claims

1. A transparent electrode film comprising an oxide containing indium, zinc and tin and having a thickness of 25 nm or less.

2. A transparent electrode film comprising an oxide containing indium and zinc and having a thickness of 30 nm or less.

3. The transparent electrode film according to claim 1 which has an atomic ratio In/(In+Zn+Sn) of 0.4 to 0.95, an atomic ratio Zn/(In+Zn+Sn) of 0.01 to 0.59, and an atomic ratio Sn/(In+Zn+Sn) of 0.01 to 0.59.

4. The transparent electrode film according to claim 2 which has an atomic ratio In/(In+Zn) of 0.5 to 0.95 and an atomic ratio Zn/(In+Zn) of 0.05 to 0.5.

5. The transparent electrode film according to any one of claims 1 to 4 wherein the oxide is amorphous.

6. The transparent electrode film according to any one of claims 1 to 5 which has a refractive index of 1.9 or more at a wavelength ranging from 300 to 800 nm.

7. An electronic device which is provided with the transparent electrode film according to any one of claims 1 to 6 as at least part of an electric circuit.

8. The electronic device according to claim 7 which is a liquid crystal display.
